(19) **Europäisches Patentamt**
**European Patent Office**
**Office européen des brevets**

(11) **EP 2 886 600 B1**

(12) **EUROPEAN PATENT SPECIFICATION**

(45) Date of publication and mention
of the grant of the patent:
**30.05.2018 Bulletin 2018/22**

(51) Int Cl.:
*C08L 23/14* (2006.01)     *C08F 2/00* (2006.01)

(21) Application number: **13198670.5**

(22) Date of filing: **19.12.2013**

(54) **Multimodal polypropylene with respect to comonomer content**

Multimodales Polypropylen gegenüber dem Co-Monomergehalt

Polypropylène multimodal par rapport à un taux de comonomères

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.06.2015 Bulletin 2015/26**

(73) Proprietors:
• **Abu Dhabi Polymers Co. Ltd (Borouge) LLC.
Abu Dhabi (AE)**
• **Borealis AG
1220 Vienna (AT)**

(72) Inventors:
• **Lampela, Janne
Abu Dhabi (AE)**
• **Johnsen, Geir
Abu Dhabi (AE)**

(74) Representative: **Lux, Berthold
Maiwald Patentanwalts- und
Rechtsanwaltsgesellschaft mbH
Elisenhof
Elisenstraße 3
80335 München (DE)**

(56) References cited:
**EP-A1- 1 923 200     EP-A1- 1 947 143**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a new propylene copolymer with multimodal comonomer distribution, its manufacture as well as to its use in molded articles.

Propylene copolymers can be used for many applications. For instance propylene copolymers are used in the area of food packaging where impact resistance as well as optical properties plays an important role. Further nowadays the manufacture of such articles shall be accomplish by high output rates. However, high output rates require rather low molecular weights which can negatively affect the mechanical and/or optical properties. In addition in the market where optical properties are a key issue the products shall not suffer by yellowishness caused by undesired side products. Further in the food packaging market high unwanted smell is not accepted. Typically peroxides used in the manufacture of polymers are causer of such unwanted smell.

EP 1 947 143 relates to a moulded article comprising a propylene composition, wherein said composition comprises a polymer (e.g. copolymer) of propylene and a $C_4$ $\alpha$-olefin (e.g. 1-butene).

EP 1 923 200 relates to an article comprising a biaxially oriented polypropylene composition, wherein said composition comprises a multimodal polypropylene and a polymeric nucleating agent.

Thus the object of the present invention is to provide a polymer material for molding applications, especially for food packaging, which has highly advantageous mechanical properties and additionally highly desirable processing properties for producing molded articles.

The finding of the present invention is that the objects can be solved by a propylene copolymer with high melt flow rate, wherein said propylene copolymer comprises a nucleating agent and has a multimodal comonomer distribution.

Accordingly the present invention is in particular directed to a propylene copolymer, wherein said propylene copolymer has

(a) a comonomer content in the range of 4.4 to 7.3 mol.-%, and
(b) a melt flow rate $MFR_2$ (230 °C) measured according to ISO 1133 of at least 10 g/10min,
   and wherein said propylene copolymer comprises, preferably consists of,

(i) a first propylene copolymer fraction (R-PP1)
(ii) a second propylene copolymer fraction (R-PP2),
(iii) a nucleating agent; and
(iv) optional further additives different to the nucleating agent

wherein further
(c) the first propylene copolymer fraction (R-PP1) has a comonomer content in the range of 1.5 to 3.0 mol.-%, and
(d) the comonomer content [in mol.-%] of the second propylene copolymer fraction (R-PP2) is higher than the comonomer content [in mol.-%] of the first propylene copolymer fraction (R-PP1).

Accordingly, the propylene copolymer of the invention is multimodal (including bimodal) with respect of the comonomer distribution. The comonomer content of each of first propylene copolymer fraction (R-PP1) and a second propylene copolymer fraction (R-PP2) can be measured or the other fraction can be measured and the other fraction calculated using the formula as given in "Calculation" in the example section under "A. Measuring methods".

The propylene copolymer according to this inventionn is a propylene random copolymer which denotes a copolymer of propylene monomer units and comonomer units different to propylene in which the comonomer units are randomly distributed in the polymeric chain. The propylene copolymer, i.e. the propylene random copolymer, preferably includes a fraction, which is insoluble in xylene, a so called xylene cold insoluble (XCU) fraction, in an amount of at least 70 wt%, more preferably of at least 80 wt%, still more preferably of at least 85 wt% and most preferably of at least 90 wt%, based on the total amount of the propylene copolymer, i.e. the propylene random copolymer. The rather high amount of xylene cold insoluble (XCU) fraction indicates that the propylene copolymer according to this invention is not heterophasic (polypropylene matrix in which a elastomeric phase is dispersed) but is monophasic.

The propylene copolymer according to this invention is nucleated. Preferably the nucleation is accomplished by use of a polymeric nucleating agent. Still more preferably the polymeric nucleating agent is a $\alpha$-nucleating agent, more preferably a polymeric $\alpha$-nucleating agent, e.g. a vinylcycloalkane polymer and/or a vinylalkane polymer.

Most preferably the final melt flow rate of the propylene copolymer is adjusted during the polymerization process of the propylene copolymer. Accordingly the reactor-made propylene copolymer has the melt flow rate as defined above or below or in claims. "Reactor-made propylene copolymer" denotes herein that the melt flow rate of the propylene copolymer has not been modified on purpose by post-treatment. Accordingly, in the preferred embodiment the propylene copolymer according to this invention is non-visbroken, is not visbroken by using peroxide. Accordingly, the melt flow rate is not increased by shorten the chain length of the propylene copolymer by use of peroxide. Thus it is preferred that the propylene copolymer does not contain any peroxide and/or decomposition product thereof.

It has surprisingly been found that the combination of the melt flow rate, multimodality with respect to comonomer distribution and the presence of the nucleating agent provide a propylene copolymer with processing properties that are highly desirable for processing the propylene copolymer into molded articles, namely excellent flowability property and surprisingly high crystallization temperature which properties improve markedly the cycle time of the molded articles in the molding process. Moreover the mechanical properties are highly suitable for molded articles, namely the impact strength is very advantageous and the stiffness remains in desirable levels for molding applications. Thus the use of the propylene copolymer with multimodal comonomer distribution as well as of nucleating agent provides a very good balance as regards to mechanical properties. Also organoleptic and aesthetic properties are very good.

In the following the invention is defined in more detail.

The propylene copolymer according to this invention comprises apart from propylene also comonomers. Preferably the propylene copolymer comprises apart from propylene ethylene and/or $C_4$ to $C_{12}$ $\alpha$-olefins. Accordingly the term "propylene copolymer" according to this invention is understood as a polypropylene comprising, preferably consisting of, units derivable from

(a) propylene
and

(b) ethylene and/or $C_4$ to $C_{12}$ $\alpha$-olefins, preferably ethylene.

Thus the propylene copolymer according to this invention comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the propylene copolymer according to this invention comprises, especially consists of, monomers copolymerizable with propylene from the group consisting of ethylene, 1 -butene and 1 -hexene. More specifically the propylene copolymer of this invention comprises - apart from propylene - units derivable from ethylene and/or 1-butene. In a preferred embodiment the propylene copolymer according to this invention comprises units derivable from propylene and ethylene only.

Additionally it is appreciated that the propylene copolymer preferably has comonomer content in a very specific range. Thus it is required that the comonomer content, preferably ethylene content, of the propylene copolymer is in the range of 4.4 to 7.3 mol.-%, preferably in the range of 4.5 to 7.0 mol.-%, more preferably in the range of 4.7 to below 6.8 mol.-%.

As mentioned above, the propylene copolymer according to the present invention is multimodal, preferably bimodal, with regard to the comonomer content, e.g. ethylene content, due to the presence of the two propylene copolymer fractions (R-PP1) and (R-PP2) which contain different amounts of comonomers, e.g. different amounts of ethylene. Even more preferred the propylene copolymer is bimodal in view of the comonomer content, i.e. the propylene copolymer comprises only the first propylene copolymer fraction (R-PP1) and the second propylene copolymer fraction (R-PP2).

The total comonomer content, e.g. ethylene content, of the propylene copolymer differs from the comonomer content, e.g. ethylene content, of the first propylene copolymer fraction (R-PP1). The total comonomer content, e.g. total ethylene content, [in mol.-%] of the propylene copolymer is higher than the comonomer content, e.g. ethylene content, [in mol.-%] of the first propylene copolymer fraction (R-PP1).

In one preferred embodiment the propylene copolymer fulfills inequation (I), more preferably inequation (Ia), still more preferably inequation (Ib), yet more preferably inequation (Ic), is fulfilled

$$C(PP) - C(PP1) \geq 1.0 \qquad \text{(I)}$$

$$6.5 \geq C(PP) - C(PP1) \geq 1.5 \qquad \text{(Ia)}$$

$$6.0 \geq C(PP) - C(PP1) \geq 2.0 \qquad \text{(Ib)}$$

$$5.5 \geq C(PP) - C(PP1) \geq 2.5 \qquad \text{(Ib)}$$

wherein

C(PP1) is the comonomer content, preferably ethylene content, [in mol.-%] of the first propylene copolymer fraction (R-PP1)

C(PP) is the comonomer content, preferably ethylene content, [in mol.-%] of the total propylene copolymer.

In another preferred embodiment the comonomer content, e.g. total ethylene content, [in mol.-%] of the second propylene copolymer fraction (R-PP2) is higher than the comonomer content, e.g. ethylene content, [in mol.-%] of the first propylene copolymer fraction (R-PP1). Thus it is preferred that the propylene copolymer fulfills inequation (II), more preferably inequation (IIa), still more preferably inequation (IIb), yet more preferably inequation (IIc),

$$C(PP2) - C(PP1) \geq 3.0 \qquad (II)$$

$$10.0 \geq C(PP2) - C(PP1) \geq 3.0 \qquad (IIa)$$

$$9.0 \geq C(PP2) - C(PP1) \geq 4.0 \qquad (IIb)$$

$$8.0 \geq C(PP2) - C(PP1) \geq 5.0 \qquad (IIc)$$

wherein

C(PP1) is the comonomer content, preferably ethylene content, [in mol.-%] of the first propylene copolymer fraction (R-PP1)

C(PP2) is the comonomer content, preferably ethylene content, [in mol.-%] of the second propylene copolymer fraction (R-PP2).

Thus it is preferred that the first propylene copolymer fraction (R-PP1) has a comonomer content, e.g. ethylene content, in the range of 1.5 to 3.0 mol-%, more preferably in the range 1.6 to 2.7 mol-%, still more preferably in the range 1.8 to 2.5 mol-%, like in the range of 1.9 to 2.4 mol-%.

On the other hand the second random propylene copolymer fraction (R-PP2) preferably has a comonomer content, e.g. ethylene content, in the range of more than 5.0 to 15.0 mol-%, more preferably in the range 5.0 to 12.0 mol-%, yet more preferably in the range 7.0 to 10.5 mol-%.

The comonomers of the first propylene copolymer fraction (R-PP1) and the second propylene copolymer fraction (R-PP2), respectively, copolymerizable with propylene are ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the first propylene copolymer fraction (R-PP1) and the second propylene copolymer fraction (R-PP2), respectively, comprise, especially consist of, monomers copolymerizable with propylene from the group consisting of ethylene, 1-butene and 1-hexene. More specifically the first propylene copolymer fraction (R-PP1) and second propylene copolymer fraction (R-PP2), respectively, comprise - apart from propylene - units derivable from ethylene and/or 1-butene. In a preferred embodiment the first propylene copolymer fraction (R-PP1) and the second propylene copolymer fraction (R-PP2) comprise the same comonomers, i.e. ethylene only.

The melt flow rate of the first random propylene copolymer fraction (R-PP1) and the second propylene copolymer fraction (R-PP2) may differ or may be about the same. Accordingly in one preferred embodiment the melt flow rates $MFR_2$ (230 °C) of the first random propylene copolymer fraction (R-PP1) and the second propylene copolymer fraction (R-PP2) differ not more than 5 g/lOmin, more preferably differ not more than 3 g/10min, even more preferably not more than 2 g/lOmin. Most preferably the melt flow rates $MFR_2$ (230 °C) of first random propylene copolymer fraction (R-PP1) is the same as the the melt flow rates $MFR_2$ (230 °C) of the second propylene copolymer fraction (R-PP2).

Therefore it is especially preferred that the propylene copolymer has a melt flow rate $MFR_2$ (230 °C) in the range of in the range of 10 to 100 g/10min, yet more preferably in the range 30 to 100 g/10min, still more preferably in the range of 40 to 90 g/lOmin, yet more preferably in the range of 50 to 85 g/10min, like in the range of 58 to 80 g/lOmin. Preferably the ranges given in this paragraph are applicable for the first propylene copolymer fraction (R-PP1) as well.

Preferably the weight ratio between the first propylene copolymer fraction (R-PP1) and the second propylene copolymer fraction (R-PP2) is in the range of 40/60 to 54/46, more preferably in the range of 42/58 to 52/48, like 43/57 to 50/50.

It is further preferred that the propylene copolymer comprises at least 80 wt.-%, more preferably at least 90 wt.-%, yet more preferably at least 95 wt.-%, based on the total amount of the propylene copolymer, of the first propylene copolymer fraction (R-PP1) and the second propylene copolymer fraction (R-PP2) together. In one especially preferred embodiment the first propylene copolymer fraction (R-PP1) and the second propylene copolymer fraction (R-PP2) are the only polymer components in the propylene copolymer.

As well known, the propylene copolymer may further comprise a prepolymer fraction. In case of the presence of a prepolymer fraction, said fraction is calculated to the amount (wt.-%) of the first propylene copolymer fraction (R-PP1) or the second propylene copolymer fraction (R-PP2), preferably to the amount of the first propylene copolymer fraction (R-PP1). The prepolymer fraction can be propylene homopolymer or copolymer, the latter preferred.

More preferably the propylene copolymer consists of (i) the first propylene copolymer fraction (R-PP1) and (ii) the second propylene copolymer fraction (R-PP2), the optional prepolymer fraction (preferably being part of the first propylene copolymer fraction (R-PP1)) as the polymer components, (iii) the nucleating agent and optional, and preferable, (iv) the further additives different to nucleating agent as defined above or below or in claims.

Further the propylene copolymer has preferably a melting temperature of more than 148 °C, more preferably in the range of more than 148.0 to 160.0 °C, still more preferably in the range of 150.0 to 158.0 °C, like in the range of 151.0 to 156.0 °C.

Additionally it is appreciated that the propylene copolymer has a crystallization temperature of more than 119.0 °C, more preferably in the range of more than 119.0 to 130.0 °C, yet more preferably in the range of 120.0 to 128.0 °C, like in the range of 121.0 to 127.0 °C.

The xylene soluble content can be in a rather broad range. Accordingly it is preferred that the propylene copolymer has a xylene cold soluble fraction (XCS) in the range of 4.0 to below 15 wt.-%, more preferably in the range of 4.0 to 12 wt.-%, yet more preferably in the range of 6 to 10wt.-%.

One further preferred characteristic of the propylene copolymer according to this invention is that it is not visbroken. During visbreaking, higher molar mass chains of the starting product are broken statistically more frequently than lower molar mass molecules, resulting in an overall decrease of the average molecular weight and an increase in melt flow rate. Normally a polymer with high melt flow rate is achieved by visbraking a polymer with low melt flow rate. Such visbreaking is typically carried out in any known manner, like by using peroxide as visbreaking agent. Typical visbreaking agents are 2,5-dimethyl-2,5-bis(tert.butyl-peroxy)hexane (DHBP) (for instance sold under the tradenames Luperox 101 and Trigonox 101), 2,5-dimethyl-2,5-bis(tert.butyl-peroxy)hexyne-3 (DYBP) (for instance sold under the tradenames Luperox 130 and Trigonox 145), dicumyl-peroxide (DCUP) (for instance sold under the tradenames Luperox DC and Perkadox BC), di-tert.butyl-peroxide (DTBP) (for instance sold under the tradenames Trigonox B and Luperox Di), tert.butyl-cumyl-peroxide (BCUP) (for instance sold under the tradenames Trigonox T and Luperox 801) and bis (tert.butylperoxy-isopropyl)benzene (DIPP) (for instance sold under the tradenames Perkadox 14S and Luperox DC). Accordingly it is preferred that the propylene copolymer has not been treated with peroxide, especially not with peroxide as listed in this paragraph. Thus in a preferred embodiment the propylene copolymer according to this invention does not contain any peroxide and/or decomposition product thereof.

In addition to (a)-nucleating agent, the propylene copolymer as defined in the instant invention may contain, preferably contains, up to 5.0 wt.-% additives, like antioxidants, acid scavangers, UV stabilisers, as well as processing aids, such as slip agents and antiblocking agents. Preferably the additive content (without (a-)nucleating agents) is below 3.0 wt.-%, like below 1.0 wt.-%.

The propylene copolymer preferably comprises a $\alpha$-nucleating agent. Even more preferred the present propylene copolymer is free of $\beta$-nucleating agents. The $\alpha$-nucleating agent, if present, is preferably selected from the group consisting of

(i) salts of monocarboxylic acids and polycarboxylic acids, e.g. sodium benzoate or aluminum tert-butylbenzoate, and

(ii) dibenzylidenesorbitol (e.g. 1,3 : 2,4 dibenzylidenesorbitol) and $C_1$-$C_8$-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, and

(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and

(iv) vinylcycloalkane polymer and vinylalkane polymer (as discussed in more detail below), and

(v) mixtures thereof.

Such additives are generally commercially available and are described, for example, in "Plastic Additives Handbook", 5th edition, 2001 of Hans Zweifel.

As mentioned earlier the nucleating agent is preferably a polymeric nucleating agent, more preferably a $\alpha$-nucleating agent, e.g. a polymeric $\alpha$-nucleating agent.

The (a)-nucleating agent content of the propylene copolymer is preferably up to 5.0 wt.-%. In a preferred embodiment,

the propylene copolymer contains not more than 3000 ppm, more preferably of 1 to 2000 ppm of a (a)-nucleating agent, in particular selected from the group consisting of dibenzylidenesorbitol (e.g. 1,3 : 2,4 dibenzylidene sorbitol), dibenzylidenesorbitol derivative, preferably dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, vinylcycloalkane polymer, vinylalkane polymer, and mixtures thereof.

In a preferred embodiment the propylene copolymer contains a vinylcycloalkane, like vinylcyclohexane (VCH), polymer and/or vinylalkane polymer, as the preferable α-nucleating agent. Preferably in this embodiment the propylene copolymer contains a vinylcycloalkane, like vinylcyclohexane (VCH), polymer and/or vinylalkane polymer, preferably vinylcyclohexane (VCH).

The nucleating agent can be introduced as a masterbatch. Alternatively some α-nucleating agentsas defined in the present invention, can be also introduced by BNT-technology as described below.

The nucleating agent may be introduced to the propylene copolymer e.g. during the polymerisation process of the propylene copolymer or may be incorporated to the propylene copolymer in the form of masterbatch (MB) together with e.g. a carrier polymer.

In case of the embodiment of a masterbatch (MB) incorporation the masterbatch (MB) contains a nucleating agent, which is preferably a polymeric nucleating agent, more preferably α-nucleating agent, most preferably a vinylcycloalkane, like vinylcyclohexane (VCH), polymer and/or vinylalkane polymer, preferably vinylcyclohexane (VCH) polymer, as defined above or below, in an amount of not more than 500 ppm, more preferably of 1 to 200 ppm, and still more preferably of 5 to 100 ppm, based on the weight of the masterbatch (MB) (100 wt.%). In this embodiment, more preferably, said masterbatch (MB) is present in an amount of not more than 10.0 wt.-%, more preferably not more than 5.0 wt.-% and most preferably not more than 3.5 wt.-%, with the preferred amount of masterbatch (MB) being from 1.5 to 3.5 wt.-%, based on the total amount of the propylene copolymer. Most preferably the masterbatch (MB) comprises, preferably consists of the homopolymer or copolymer, preferably homo polymer, of propylene which has been nucleated according to BNT-technology as described below.

It is preferred that the nucleating agent is introduced to the propylene copolymer during the polymerisation process of the propylene copolymer. The nucleating agent is preferably introduced to the propylene copolymer by first polymerising the above defined vinyl compound, preferably vinylcycloalkane, as defined above or below, in the presence of a catalyst system comprising a solid catalyst component, preferably a solid Ziegler Natta catalyst component, a cocatalyst and optional external donor, and the obtained reaction mixture of the polymer of the vinyl compound, preferably vinyl cyclohexane (VCH) polymer, and the catalyst system is then used for producing the propylene copolymer. The above incorporation of the polymeric nucleating agent to the propylene copolymer during the polymerization of said propylene copolymer is called herein as BNT-technology as described below.

Said obtained reaction mixture is herein below referred interchangeably as modified catalyst system.

Preferably the vinylcycloalkane is vinylcyclohexane (VCH) polymer which is introduced into the propylene copolymer by the BNT technology.

More preferably in this preferred embodiment, the amount of vinylcycloalkane, like vinylcyclohexane (VCH), polymer and/or vinylalkane polymer, more preferably of vinylcyclohexane (VCH) polymer, in the propylene copolymer is not more than 500 ppm, more preferably of 1 to 200 ppm, most preferably 5 to 100 ppm.

With regard to the BNT-technology reference is made to the international applications WO 99/24478, WO 99/24479 and particularly WO 00/68315. According to this technology a catalyst system, preferably a Ziegler-Natta procatalyst, can be modified by polymerising a vinyl compound in the presence of the catalyst system, comprising in particular the special Ziegler-Natta procatalyst, an external donor and a cocatalyst, which vinyl compound has the formula:

$$CH_2=CH-CHR^3R^4$$

wherein $R^1$ and $R^4$ together form a 5- or 6-membered saturated, unsaturated or aromatic ring or independently represent an alkyl group comprising 1 to 4 carbon atoms, and the modified catalyst is used for the preparation of the propylene copolymer according to this invention. The polymerized vinyl compound acts as an α-nucleating agent. The weight ratio of vinyl compound to solid catalyst component in the modification step of the catalyst is preferably of up to 5 (5:1), preferably up to 3 (3:1) most preferably from 0.5 (1:2) to 2 (2:1). The most preferred vinyl compound is vinylcyclohexane (VCH).

The propylene copolymer according to this invention is preferably produced in a sequential polymerization process in the presence of a Ziegler-Natta catalyst, more preferably in the presence of a catalyst (system) as defined below.

The term "sequential polymerization process" indicates that the propylene copolymer is produced in at least two reactors, preferably in two reactors, connected in series. Accordingly the present process comprises at least a first reactor (R1) and a second reactor (R2). The term "polymerization reactor" shall indicate that the main polymerization takes place. Thus in case the process consists of two polymerization reactors, this definition does not exclude the option that the overall process comprises for instance a pre-polymerization step in a pre-polymerization reactor. The term "consist of' is only a closing formulation in view of the main polymerization reactors.

The first reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR).

The second reactor (R2) is preferably a gas phase reactor (GPR). Such gas phase reactor (GPR) can be any mechanically mixed or fluid bed reactor. For example the gas phase reactor (GPR) can be a mechanically agitated fluid bed reactor with gas velocities of at least 0.2 m/sec. Thus it is appreciated that the gas phase reactor is a fluidized bed type reactor, optionally with a mechanical stirrer.

Thus in a preferred embodiment the first reactor (R1) is a slurry reactor (SR), like a loop reactor (LR), whereas the second reactor (R2) is a gas phase reactor (GPR). Accordingly for the instant process two polymerization reactors, namely a slurry reactor (SR), like a loop reactor (LR), and a gas phase reactor (GPR) are connected in series. If needed prior to the slurry reactor (SR) a pre-polymerization reactor is placed.

Preferably in the first reactor (R1) the first propylene copolymer fraction (R-PP1) of the propylene copolymer is produced, whereas in the second rector (R2) the second propylene copolymer fraction (R-PP2) is produced.

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell described e.g.in figure 20 of the paper by Galli and Vecello, Prog.Polym.Sci. 26 (2001) 1287-1336.

Preferably, in the instant process for producing the propylene copolymer as defined above the conditions for the first reactor (R1), i.e. the slurry reactor (SR), like a loop reactor (LR), of step (a) may be as follows:

- the temperature is within the range of 40 °C to 110 °C, preferably between 60 °C and 100 °C, like 68 to 95 °C,
- the pressure is within the range of 20 bar to 80 bar, preferably between 40 bar to 70 bar,
- hydrogen can be added for controlling the molar mass in a manner known per se.

Subsequently, the reaction mixture from step (a) (containing preferably the first propylene copolymer fraction (R-PP1)) is transferred to the second reactor (R2), i.e. gas phase reactor (GPR), whereby the conditions are preferably as follows:

- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se.

The residence time can vary in the two reaction zones.

In one embodiment of the process for producing the propylene copolymer the residence time the first reactor (R1), i.e. the slurry reactor (SR), like a loop reactor (LR), is in the range 0.2 to 4 hours, e.g. 0.3 to 1.5 hours and the residence time in the gas phase reactor (GPR) will generally be 0.2 to 6.0 hours, like 0.5 to 4.0 hours.

If desired, the polymerization may be effected in a known manner under supercritical conditions in the first reactor (R1), i.e. in the slurry reactor (SR), like in the loop reactor (LR), and/or as a condensed mode in the gas phase reactor (GPR).

The prepolymerization reaction is typically conducted at a temperature of 0 to 50 °C, preferably from 10 to 45 °C, and more preferably from 15 to 40 °C.

Accordingly the propylene copolymer according to this invention is obtained by a sequential polymerization process comprising the steps of

(a) polymerizing propylene and at least one $\alpha$-olefin different to propylene, e.g. ethylene, in a first reactor (R1) obtaining thereby the first propylene copolymer fraction (R-PP1)

(b) transferring the first propylene copolymer fraction (R-PP1) into a second reactor (R2)

(c) polymerizing, in the presence of the first propylene copolymer fraction (R-PP1), propylene and at least one $\alpha$-olefin different to propylene, e.g. ethylene, in said second reactor (R2) obtaining a second propylene copolymer fraction (R-PP2), wherein the mixture of the first propylene copolymer fraction (R-PP1) and second propylene copolymer fraction (R-PP2) forms the propylene copolymer.

More preferably the propylene copolymer is obtained in the presence of

(I) a solid catalyst component comprising a magnesium halide, a titanium halide and an internal electron donor; and
(II) a cocatalyst comprising an aluminium alkyl and optionally an external electron donor, and
(III) an optional nucleating agent, preferably in the presence of a nucleating agent as defined above or below;

and in a sequential polymerization process comprising the steps of

(a) continuously polymerizing propylene together with a comonomer selected from $C_2$ to $C_8$ $\alpha$-olefins excluding propylene, e.g. ethylene, in a first reactor (R1) by introducing streams of propylene, hydrogen and said comonomer into the first reactor (R1) at a temperature of 60 to 80°C and a pressure of 3000 to 6500 kPa to produce a first propylene copolymer fraction (R-PP1);
(b) withdrawing from the first reactor (R1) a stream comprising said first propylene copolymer fraction (R-PP1) and transferring said stream into a second reactor (R2);
(c) polymerizing propylene together with a comonomer selected from $C_2$ to $C_8$ $\alpha$-olefins excluding propylene, e.g. ethylene, in said second reactor (R2) by introducing streams of propylene, said comonomer and optionally hydrogen into said second reactor (R2) at a temperature of 70 to 90°C and a pressure of 1000 to 3000 kPa to produce a second propylene copolymer fraction (R-PP2), wherein the mixture of the first propylene copolymer fraction (R-PP1) and second propylene copolymer fraction (R-PP2) forms the propylene copolymer.
(d) continuously withdrawing a stream comprising said propylene copolymer from the second reactor (R2) and optionally mixing said propylene copolymer with additives.

It is especially preferred that the process according to the present invention includes the following process steps: polymerising a vinyl compound as defined above, preferably vinyl cyclohexane (VCH), in the presence of a catalyst system comprising the solid catalyst component to obtain a modified catalyst system which is the reaction mixture comprising the solid catalyst system and the produced polymer of the vinyl compound, preferably, and wherein, the weight ratio (g) of the polymer of the vinyl compound to the solid catalyst system is up to 5 (5:1), preferably up to 3 (3:1) most preferably is from 0.5 (1:2) to 2 (2:1), and the obtained modified catalyst system is fed to polymerisation step (a) of the process for producing the propylene copolymer.

The used catalyst is preferably a Ziegler-Natta catalyst system and even more preferred a modified Ziegler Natta catalyst system as defined in more detail below.

Such a Ziegler-Natta catalyst system typically comprises a solid catalyst component, preferably a solid transition metal component, and a cocatalyst, and optionally an external donor. The solid catalyst component comprises most preferably a magnesium halide, a titanium halide and an internal electron donor. Such catalysts are well known in the art. Examples of such solid catalyst components are disclosed, among others, in WO 87/07620, WO 92/21705, WO 93/11165, WO 93/11166, WO 93/19100, WO 97/36939, WO 98/12234, WO 99/33842.

Suitable electron donors are, among others, esters of carboxylic acids, like phthalates, citraconates, and succinates. Also oxygen- or nitrogen-containing silicon compounds may be used. Examples of suitable compounds are shown in WO 92/19659, WO 92/19653, WO 92/19658, US 4,347,160, US 4,382,019, US 4,435,550, US 4,465,782, US 4,473,660, US 4,530,912 and US 4,560,671.

Moreover, said solid catalyst components are preferably used in combination with well known external electron donors, including without limiting to, ethers, ketones, amines, alcohols, phenols, phosphines and silanes, for example organosilane compounds containing Si-OCOR, Si-OR, or Si-NR$_2$ bonds, having silicon as the central atom, and R is an alkyl, alkenyl, aryl, arylalkyl or cycloalkyl with 1-20 carbon atoms; and well known cocatalysts, which preferably comprise an aluminium alkyl compound as known in the art, to polymerise the propylene copolymer.

When a nucleating agent is introduced to the propylene copolymer during the polymerisation process of the propylene copolymer, the amount of nucleating agent present in the propylene copolymer is preferably not more than 500 ppm, more preferably is 0.025 to 200 ppm, still more preferably is 1 to 100 ppm, and most preferably is 5 to 100 ppm, based on the propylene copolymer and the nucleating agent, preferably based on the total weight of the propylene copolymer including all additives.

The present invention is also directed to articles, preferably molded articles, like injection molded articles and blow molded articles, e.g. extrusion or injection blow molded articles.

Preferably the article, especially as defined in the previous paragraph, comprises based on the total amount of the article at least 50 wt.-%, like 50 to 99.9 wt.-%, more preferably at least 60 wt.-%, like 60 to 99 wt.-%, still more preferably at least 80 wt.-%, like 80 to 99 wt.-%, yet more preferably at least 90 wt.-%, like 90 to 99 wt.-%, of the propylene copolymer.

In the following the present invention is further illustrated by means of examples.

**EXAMPLES**

**A. Measuring methods**

The following definitions of terms and determination methods apply for the above general description of the invention as well as to the below examples unless otherwise defined.

**Quantification of copolymer microstructure by NMR spectroscopy**

Quantitative nuclear-magnetic resonance (NMR) spectroscopy was used to quantify the comonomer content of the polymers.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125 °C using nitrogen gas for all pneumatics. Approximately 200 mg of material was dissolved in 3 ml of 1,2-tetrachloroethane-d$_2$ (TCE-d$_2$) along with chromium-(III)-acetylacetonate (Cr(acac)$_3$) resulting in a 65 mM solution of relaxation agent in solvent as described in G. Singh, A. Kothari, V. Gupta, Polymer Testing 2009, 28(5), 475.

To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme as described in Z. Zhou, R. Kuemmerle, X. Qiu, D. Redwine, R. Cong, A. Taha, D. Baugh, B. Winniford, J. Mag. Reson. 187 (2007) 225 and V. Busico, P. Carbonniere, R. Cipullo, C. Pellecchia, J. Severn, G. Talarico, Macromol. Rapid Commun. 2007, 28, 1128. A total of 6144 (6k) transients were acquired per spectra. Quantitative $^{13}C\{^1H\}$ NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present.

With characteristic signals corresponding to 2,1 erythro regio defects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regio defects on determined properties was required. Characteristic signals corresponding to other types of regio defects were not observed.

Characteristic signals corresponding to the incorporation of ethylene were observed (as described in Cheng, H. N., Macromolecules 1984, 17, 1950) and the comonomer fraction calculated as the fraction of ethylene in the polymer with respect to all monomer in the polymer.

The comonomer fraction was quantified using the method of W-J. Wang and S. Zhu, Macromolecules 2000, 33 1157 , through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

The mole percent comonomer incorporation was calculated from the mole fraction.

The weight percent comonomer incorporation was calculated from the mole fraction.

**Calculation** of comonomer content of the first propylene copolymer fraction (R-PP1) or second propylene copolymer fraction (R-PP2), in this application of the second propylene copolymer fraction (R-PP2):

$$\frac{C(PP) - w(PP1)x\,C(PP1)}{w(PP2)} = C(PP2) \quad (I)$$

wherein

w(PP1)    is the weight fraction [in wt.-%] of the first propylene copolymer fraction (R-PP1),
w(PP2)    is the weight fraction [in wt.-%] of second propylene copolymer fraction (R-PP2),
C(PP1)    is the comonomer content [in mol-%] of the first propylene copolymer fraction (R-PP1),
C(PP)    is the comonomer content [in mol-%] of the propylene copolymer,
C(PP2)    is the calculated comonomer content [in mol-%] of the second propylene copolymer fraction (R-PP2).

**MFR$_2$ (230 °C)** is measured according to ISO 1133 (230 °C, 2.16 kg load).

**Calculation** of melt flow rate MFR$_2$ (230 °C) of the first or second propylene copolymer fraction (R-PP2)/(R-PP1), herein of the second propylene copolymer fraction (R-PP2):

$$MFR(PP2) = 10^{\left[\frac{\log(MFR(PP))-w(PP1)\,x\,\log(MFR(PP1))}{w(PP2)}\right]} (III)$$

wherein

w(PP1)    is the weight fraction [in wt.-%] of the first propylene copolymer fraction (R-PP1),
w(PP2)    is the weight fraction [in wt.-%] of second propylene copolymer fraction (R-PP2),
MFR(PP1)  is the melt flow rate MFR$_2$ (230 °C) [in g/10min] of the first propylene copolymer fraction (R-PP1),
MFR(PP)   is the melt flow rate MFR$_2$ (230 °C) [in g/10min] of the propylene copolymer,
MFR(PP2)  is the calculated melt flow rate MFR$_2$ (230 °C) [in g/10min] of the second propylene copolymer fraction (R-PP2).

**The xylene soluble fraction (XCS) at room temperature (XS, wt.-%):** The amount of the polymer soluble in xylene is determined at 25 °C according to ISO 16152; first edition; 2005-07-01. The remaining part is the xylene cold insoluble (XCU) fraction.

**DSC analysis, melting temperature (T$_m$) and heat of fusion (H$_f$), crystallization temperature (T$_c$) and heat of crystallization (H$_c$):** measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature and heat of crystallization (H$_c$) are determined from the cooling step, while melting temperature and heat of fusion (H$_f$) are determined from the second heating step.

**Charpy impact test:** The Charpy notched impact strength (NIS) was measured according to ISO 179 1eA at 0°C and +23 °C, using injection molded bar test specimens of 80x10x4 mm$^3$ prepared in accordance with ISO 1873-2:2007.

**Haze** was determined according to ASTM D 1003-07on 60x60x2 mm$^3$ plaques injection moulded in line with EN ISO 1873-2 using a melt temperature of 230°C.

**Tensile test:** The tensile modulus was measured at 23 °C according to ISO 527-1 (cross head speed 1 mm/min) using injection moulded specimens moulded at 180 °C or 200 °C according to ISO 527-2(1B), produced according to EN ISO 1873-2 (dog 10 bone shape, 4 mm thickness).

**Yellowness Index (YI)** is a number calculated from spectrophotometric data that describes the change in color of a test sample from clear or white towards yellow. This test is most commonly used to evaluate color changes in a material caused by real or simulated outdoor exposure. The spectrophotometric instrument is a Spectraflash SF600 with ColorTools software which calculates the yellowness index E 313 according to ASTM E313. On the sample holder and pipe sample is tested. As samples 2 mm compression molded samples or pellets were used.

The yellowness index is rated as follows:

|  | Rating 1 | Rating 2 | Rating 3 | Rating 4 |
|---|---|---|---|---|
| YI according to ASTM E313 | < (-0.9) | (-0.9) - 1.5 | 1.5 - 6.5 | > 6.5 |

**Spiral flow:**

Spiral Test is carried out using an Engel ES330/65 cc90 injection moulding apparatus with a spiral mould and pressure of 600, 1000 or 1400 bar
screw diameter: 35 mm
max. piston displacement: 150 cm$^3$
spec. injection pressure: 600, 1000, or 1400 bar
tool form: oval form; provided by Axxicon; thickness 2 mm, breadth: 5 mm temperature in pre-chamber and die: 230 °C
temperature in zone 2/zone 3/zone 4/zone 5: 230 °C/230 °C/225 °C/200 °C
injection cycle: injection time including holding: 10 s
cooling time: 15 s
injection pressure: Follows from the predetermined length of the testing material.
dwell pressure = injection pressure
screw speed: 30 rpm

system pressure: 10 bar
metering path: should be chosen so that the screw stops 20 mm before its final position at the end of the dwell pressure.
tool temperature: 40 °C

The spiral flow length can be determined immediately after the injection operation.

**B. Examples**

**Inventive example IE1:**

The catalyst used in the polymerization was a Ziegler-Natta catalyst from Borealis having Ti-content of 1.9 wt-% (as described in EP 591 224). Before the polymerization, the catalyst was prepolymerized with vinyl-cyclo-hexane (VCH) as described in EP 1 028 984 and EP 1 183 307. The ratio of VCH to catalyst of 1:1 was used in the preparation, thus the final Poly-VCH content in IE1 was less than 100 ppm.

In the first stage the catalyst described above was fed into prepolymerization reactor together with propylene and small amount of hydrogen (2.5 g/h) and ethylene (330 g/h). Triethylaluminium as a cocatalyst and dicyclopentyldimethoxysilane as a donor was used. The aluminium to donor ratio was 7.5 mol/mol and aluminium to titanium ratio was 300 mol/mol. Reactor was operated at a temperature of 30 °C and a pressure of 55 barg.

The slurry from the prepolymerization stage was directly fed into a loop reactor which was operated at 70 °C temperature and 55 barg pressure. Propylene, ethylene and hydrogen were further added to the loop reactor. The molar ratio of hydrogen to propylene was 16.9 mol/kmol and the ratio of ethylene to propylene was 3.7 mol/kmol. Production rate in loop was maintained at 30 kg/h. MFR, ethylene content and XCS of the first propylene copolymer fraction (R-PP1) can be gathered from Table 1.

The slurry from loop reactor was introduced to a gas phase reactor via direct feed line, i.e. without monomer flashing in-between the reactors. The gas phase reactor was operated at 85 °C temperature and propylene partial pressure of 16 barg. Additional hydrogen was fed with the molar ratio of hydrogen to propylene of 228 mol/kmol. Ethylene to propylene molar ratio in the gas phase reactor was 50.1 mol/kmol. The production rate in gas phase reactor was 35 kg/h and thus the total polymer production rate after the reactors was 65 kg/h. The production split (% of production made in gas phase reactor) was 55 %. MFR, ethylene content and XCS of the final propylene copolymer can be gathered from Table 1.

In pelletization stage the polymer powder was mixed with basic stabilizers, e.g. Ca-stearate, Irganox 1010, and Irgafos 168 in conventional amounts. Antistatic agent Grinsted PS426 and clarifier DMDBS were also used in the formulation. Pelletization was carried out with W&P ZSK 70 (Coperion) twin-screw extruder at melt temperature of 220 °C. Extruder throughput was 200 kg/h.

**Comparative example CE1:**

In the first stage Borealis proprietary catalyst with Ti-content of 3.4 wt-% was fed to prepolymerization reactor together with propylene and small amounts of hydrogen (2.5 g/h) and ethylene (360 g/h). Triethylaluminium as a cocatalyst and dicyclopentyldimethoxysilane as a donor was used. The aluminium to donor ratio was 7.5 mol/mol and aluminium to titanium ratio was 300 mol/mol. Reactor was operated at a temperature of 30 °C and a pressure of 55 barg.

The slurry from the prepolymerization stage was directly fed to a loop reactor which was operated at 70 °C temperature and 55 barg pressure. Propylene, hydrogen and ethylene were further added to the loop reactor. The molar ratio of hydrogen to propylene was 6.1 mol/kmol and the ratio of ethylene to propylene was 7.2 mol/kmolProduction rate in loop was 30 kg/h. MFR, ethylene content and XCS of the first propylene copolymer fraction (R-PP1) can be gathered from Table 1.

The slurry from loop reactor was introduced to a gas phase reactor via direct feed line, i.e. without monomer flashing in-between the reactors. The gas phase reactor was operated at 85 °C temperature and propylene partial pressure of 21 barg. Additional ethylene and hydrogen were fed with the following molar ratios: hydrogen to propylene 45 mol/kmol and ethylene to propylene 21 mol/kmol. The production rate in gas phase reactor was 35 kg/h and thus the total polymer production rate after the reactors was 65 kg/h. The production split (% of production made in gas phase reactor) was 55 %. MFR, ethylene content and XCS of the final propylene copolymer can be gathered from Table 1.

In pelletization stage the polymer powder was mixed with basic stabilizers, e.g. Ca-stearate, Irganox 1010, and Irgafos 168 in conventional amounts. Additionally antistatic agent Grinsted PS426 and clarifier DMDBS were used in the formulation, and peroxide to reach final MFR of 70 g/10 min. Pelletization was carried out with W&P ZSK 70 (Coperion) twin-screw extruder at melt temperature of 220 °C. Extruder throughput was 200 kg/h.

**Table 1:** Inventive Example IE and comparative example CE1

|  |  | IE1 | CE1 |
|---|---|---|---|
| TEAL/Ti | [mol/mol] | 300 | 300 |
| TEAL/ D donor | [mol/mol] | 7.5 | 7.5 |
| **Loop (R-PP1)** |  |  |  |
| Temperature | [°C] | 70 | 70 |
| $MFR_2$ | [g/10min] | 70 | 8 |
| C2 content | [mol-%] | 2.1 | 4.1 |
| XCS | [wt.-%] | 3.5 | 5.0 |
| $H_2$/C3 ratio | [mol/kmol] | 16.9 | 6.1 |
| C2/C3 ratio | [mol/kmol] | 3.7 | 7.2 |
| amount | [wt.-%] | 45 | 45 |
| **1 GPR (R-PP2)** |  |  |  |
| $MFR_2$ | [g/10min] | 70 | 8 |
| C2 content** | [mol-%] | 8.7 | 4.1 |
| $H_2$/C3 ratio | [mol/kmol] | 228 | 45 |
| C2/C3 ratio | [mol/kmol] | 50.1 | 21 |
| amount | [wt.-%] | 55 | 55 |
| **Final** |  |  |  |
| $MFR_2$ | [g/lOmin] | 70 | 70* |
| C2 content | [mol-%] | 5.6 | 4.1 |
| XCS | [wt.-%] | 9.1 | 5.5 |
| Tm | [°C] | 153 | 150 |
| Tc | [°C] | 125 | 119 |

* $MFR_2$ (230°C) for CE1 was reached by visbreaking with peroxide
** calculated as defined under A. Measuring methods

**Table 2:** Properties of the Inventive Example IE and comparative example CE1

|  |  | IE1 | CE1 |
|---|---|---|---|
| Yellowness index pellets | [-] | -4.48 | -3.65 |
| Yelloness index 2mm plaque | [-] | 5 | 6.5 |
| NIS (23°C) | [$kJ/m^2$] | 3.8 | 3.8 |
| NIS (0°C) | [$kJ/m^2$] | 1.5 | 1.4 |
| Tensile modulus | [MPa] | 1030 | 1170 |
| Haze 2 mm | [%] | 26.6 | 23.7 |
| Spiral flow (600 bar) | [cm] | 40 | 35.6 |
| Spiral flow (1000 bar) | [cm] | 55.7 | 52.2 |
| Spiral flow (1400 bar) | [cm] | 68.9 | 64.4 |

**Claims**

1.  A propylene copolymer, wherein said propylene copolymer has

    (a) a comonomer content in the range of 4.4 to 7.3 mol.-%, and
    (b) a melt flow rate MFR$_2$ (230 °C) measured according to ISO 1133 of at least 10 g/lOmin,
    and wherein said propylene copolymer comprises, preferably consists of,

    (i) a first propylene copolymer fraction (R-PP1)
    (ii) a second propylene copolymer fraction (R-PP2),
    (iii) a nucleating agent; and
    (iv) optional further additives different to the nucleating agent

    wherein further
    (c) the first propylene copolymer fraction (R-PP1) has a comonomer content in the range of 1.5 to 3.0 mol.-%, and
    (d) the comonomer content [in mol.-%] of the second propylene copolymer fraction (R-PP2) is higher than the comonomer content [in mol.-%] of the first propylene copolymer fraction (R-PP1).

2.  Propylene copolymer according to claim 1, wherein

    (a) the comonomer content of the second propylene copolymer fraction (R-PP2) is in the range of 5.0 to 15.0 mol.-%,
    and/or
    (b) inequation (I) is fulfilled

    $$C(PP) - C(PP1) \geq 1.0 \qquad (I)$$

    wherein

    C(PP1) is the comonomer content [in mol.-%] of the first propylene copolymer fraction (R-PP1)
    C(PP) is the comonomer content [in mol.-%] of the total propylene copolymer,

    and/or
    (c) in equation (I) is fulfilled

    $$C(PP2) - C(PP1) \geq 3.0 \qquad (II)$$

    wherein

    C(PP1) is the comonomer content [in mol.-%] of the first propylene copolymer fraction (R-PP1)
    C(PP2) is the comonomer content [in mol.-%] of the second propylene copolymer fraction (R-PP2).

3.  Propylene copolymer according to claim 1 or 2, wherein

    (a) the weight ratio between the first propylene copolymer fraction (R-PP1) and the second propylene copolymer fraction (R-PP2) is from 40/60 to 54/46;
    and/or
    (b) the propylene copolymer comprises at least 90 wt.-%, based on the total amount of the propylene copolymer, of the first propylene copolymer fraction (R-PP1) and the second propylene copolymer fraction (R-PP2) together.

4.  Propylene copolymer according to any one of the preceding claims, wherein said propylene copolymer has

    (a) a melting temperature of more than 148.0 °C;
    and/or
    (b) a crystallization temperature of more than 119.0 °C.

5. Propylene copolymer according to any one of the preceding claims, wherein the nucleating agent is a polymeric nucleating agent, preferably is a polymeric $\alpha$-nucleating agent, more preferably is vinylcycloalkane polymer and/or vinylalkane polymer.

6. Propylene copolymer according to any one of the preceding claims, wherein the amount of nucleating agent, based on the total weight of the propylene copolymer, is up to 5.0 wt.-%, preferably not more than 3,000 ppm, more preferably 1 to 2,000 ppm, most preferably not more than 500 ppm, even more preferably is 0.025 to 200 ppm, and it is most preferred that the amount of nucleating agent, based on the total weight of the propylene copolymer, is 5 to 100 ppm.

7. Propylene copolymer according to any one of the preceding claims, wherein

(a) the comonomer of the propylene copolymer is selected from ethylene, $C_4$ to $C_{12}$ $\alpha$-olefin, and mixtures thereof, preferably the comonomer is ethylene,
and/or
(b) the comonomer in the first propylene copolymer fraction (R-PP1) and in the second propylene copolymer fraction (R-PP2) are the same.

8. Propylene copolymer according to any one of the preceding claims, wherein said propylene copolymer

(a) is non- visbroken, prefereably is a reactor-made propylene copolymer; and/or
(b) does not contain peroxide.

9. Propylene copolymer according to any one of the preceding claims, wherein said propylene copolymer has

(a) comonomer content, preferably ethylene content, in the range of 4.5 to 7.0 mol.-%;
and/or
(b) a melt flow rate $MFR_2$ (230 °C) measured according to ISO 1133 in the range of 10 to 100 g/10min, preferably in the range of 30 to 100 g/10min, preferably in the range of 40 to 90 g/10min.

10. Propylene copolymer according to any one of the preceding claims, wherein said propylene copolymer is produced in a sequential polymerization process comprising a first a reactor (R1) and a second reactor (R2), wherein further the first propylene copolymer fraction (R-PP1) is produced in the first reactor (R1) and the second propylene copolymer fraction (R-PP2) is produced in the second reactor (R2).

11. Molded article comprising a propylene copolymer according to any of the preceding claims.

12. Process for producing a propylene copolymer according to any one of the preceding claims 1 to 9, wherein the process is a sequential polymerization process comprising the steps of

(a) polymerizing propylene and at least one $\alpha$-olefin different to propylene in a first reactor (R1) obtaining thereby the first propylene copolymer fraction (R-PP1)
(b) transferring the first propylene copolymer fraction (R-PP1) into a second reactor (R2)
(c) polymerizing, in the presence of the first propylene copolymer fraction (R-PP1), propylene and at least one $\alpha$-olefin different to propylene in said second reactor (R2) obtaining a second propylene copolymer fraction (R-PP2), wherein the mixture of the first propylene copolymer fraction (R-PP1) and second propylene copolymer fraction (R-PP2) forms the propylene copolymer.

13. Process according to claim 12, wherein the polymerization in the first reactor (R1) and second reactor (2) takes place in the presence of a Ziegler-Natta catalyst.

**Patentansprüche**

1. Propylen-Copolymer, wobei das Propylen-Copolymer aufweist

(a) einen Comonomer-Gehalt im Bereich von 4,4 bis 7,3 Mol-%, und
(b) eine Schmelze-Fließ-Rate $MFR_2$ (230°C), gemessen gemäß ISO 1133, von mindestens 10 g/10 min,

und wobei das Propylen-Copolymer umfasst, vorzugsweise besteht aus,

(i) einer ersten Propylen-Copolymer-Fraktion (R-PP1)
(ii) einer zweiten Propylen-Copolymer-Fraktion (R-PP2),
(iii) einem Nukleierungs-Mittel; und
(iv) gegebenenfalls weiteren Additiven, die von dem Nukleierungs-Mittel verschieden sind,

wobei weiterhin
(c) die erste Propylen-Copolymer-Fraktion (R-PP1) einen Comonomer-Gehalt im Bereich von 1,5 bis 3,0 Mol-% aufweist, und
(d) der Comonomer-Gehalt [in Mol-%] von der zweiten Propylen-Copolymer-Fraktion (R-PP2) höher als der Comonomer-Gehalt [in Mol-%] von der ersten Propylen-Copolymer-Fraktion (R-PP1) ist.

2. Propylen-Copolymer nach Anspruch 1, wobei

(a) der Comonomer-Gehalt von der zweiten Propylen-Copolymer-Fraktion (R-PP2) im Bereich von 5,0 bis 15,0 Mol-% liegt,
und/oder
(b) Ungleichung (I) erfüllt wird

$$C(PP) - C(PP1) \geq 1,0 \qquad (I)$$

wobei

C(PP1) der Comonomer-Gehalt [in Mol-%] von der ersten Propylen-Copolymer-Fraktion (R-PP1) ist
C(PP) der Comonomer-Gehalt [in Mol-%] von dem gesamten Propylen-Copolymer ist,

und/oder
(c) Ungleichung (I) erfüllt wird

$$C(PP2) - C(PP1) \geq 3,0 \qquad (II)$$

wobei

C(PP1) der Comonomer-Gehalt [in Mol-%] von der ersten Propylen-Copolymer-Fraktion (R-PP1) ist
C(PP2) der Comonomer-Gehalt [in Mol-%] von der zweiten Propylen-Copolymer-Fraktion (R-PP2) ist.

3. Propylen-Copolymer nach Anspruch 1 oder 2, wobei

(a) das Gewichts-Verhältnis zwischen der ersten Propylen-Copolymer-Fraktion (R-PP1) und der zweiten Propylen-Copolymer-Fraktion (R-PP2) von 40/60 bis 54/46 ist;
und/oder
(b) das Propylen-Copolymer mindestens 90 Gew.-%, basierend auf der Gesamt-Menge des Propylen-Copolymers, von der ersten Propylen-Copolymer-Fraktion (R-PP1) und der zweiten Propylen-Copolymer-Fraktion (R-PP2) zusammen umfasst.

4. Propylen-Copolymer nach einem der vorangehenden Ansprüche, wobei das Propylen-Copolymer aufweist

(a) eine Schmelz-Temperatur von mehr als 148,0°C; und/oder
(b) eine Kristallisations-Temperatur von mehr als 119,0°C.

5. Propylen-Copolymer nach einem der vorangehenden Ansprüche, wobei das Nukleierungs-Mittel ein polymeres Nukleierungs-Mittel ist, vorzugsweise ein polymeres $\alpha$-Nukleierungs-Mittel ist; bevorzugter Vinylcycloalkan-Polymer und/oder Vinylalkan-Polymer ist.

**6.** Propylen-Copolymer nach einem der vorangehenden Ansprüche, wobei die Menge an Nukleierungs-Mittel, basierend auf dem Gesamt-Gewicht von dem Propylen-Copolymer, bis zu 5,0 Gew.-%, vorzugsweise nicht mehr als 3 000 ppm, bevorzugter 1 bis 2 000 ppm, besonders bevorzugt nicht mehr als 500 ppm ist, auch bevorzugter 0,025 bis 200 ppm ist, und es am meisten bevorzugt ist, dass die Menge an Nukleierungs-Mittel, basierend auf dem Gesamt-Gewicht von dem Propylen-Copolymer, 5 bis 100 ppm ist.

**7.** Propylen-Copolymer nach einem der vorangehenden Ansprüche, wobei

(a) das Comonomer von dem Propylen-Copolymer ausgewählt ist aus Ethylen, $C_4$ bis $C_{12}$ $\alpha$-Olefin und Gemischen davon, vorzugsweise ist das Comonomer Ethylen,
und/oder
(b) das Comonomer in der ersten Propylen-Copolymer-Fraktion (R-PP1) und in der zweiten Propylen-Copolymer-Fraktion (R-PP2) die Gleichen sind.

**8.** Propylen-Copolymer nach einem der vorangehenden Ansprüche, wobei das Propylen-Copolymer

(a) nicht Visbreaking unterworfen wurde, vorzugsweise ein Reaktor-hergestelltes Propylen-Copolymer ist;
und/oder
(b) kein Peroxid enthält.

**9.** Propylen-Copolymer nach einem der vorangehenden Ansprüche, wobei das Propylen-Copolymer aufweist

(a) einen Comonomer-Gehalt, vorzugsweise EthylenGehalt, im Bereich von 4,5 bis 7,0 Mol-%;
und/oder
(b) eine Schmelze-Fließ-Rate $MFR_2$ (230°C), gemessen gemäß ISO 1133, im Bereich von 10 bis 100 g/10 min, vorzugsweise im Bereich von 30 bis 100 g/10 min, vorzugsweise im Bereich von 40 bis 90 g/10 min.

**10.** Propylen-Copolymer nach einem der vorangehenden Ansprüche, wobei das Propylen-Copolymer in einem sequenziellen Polymerisations-Verfahren hergestellt wird, umfassend einen ersten Reaktor (R1) und einen zweiten Reaktor (R2), wobei weiterhin die erste Propylen-Copolymer-Fraktion (R-PP1) in dem ersten Reaktor (R1) hergestellt wird und die zweite Propylen-Copolymer-Fraktion (R-PP2) in dem zweiten Reaktor (R2) hergestellt wird.

**11.** Form-Gegenstand, umfassend ein Propylen-Copolymer nach einem der vorangehenden Ansprüche.

**12.** Verfahren zur Herstellung eines Propylen-Copolymers nach einem der vorangehenden Ansprüche 1 bis 9, wobei das Verfahren ein sequenzielles Polymerisations-Verfahren ist, umfassend die Schritte von

(a) Polymerisieren von Propylen und mindestens einem $\alpha$-Olefin, das von Propylen verschieden ist, in einem ersten Reaktor (R1), wobei dadurch die erste Propylen-Copolymer-Fraktion (R-PP1) erhalten wird,
(b) Überführen der ersten Propylen-Copolymer-Fraktion (R-PP1) in einen zweiten Reaktor (R2),
(c) Polymerisieren in Gegenwart von der ersten Propylen-Copolymer-Fraktion (R-PP1) Propylen und mindestens ein $\alpha$-Olefin, das von Propylen verschieden ist, in dem zweiten Reaktor (R2), wobei dadurch eine zweite Propylen-Copolymer-Fraktion (R-PP2) erhalten wird, wobei das Gemisch von der ersten Propylen-Copolymer-Fraktion (R-PP1) und zweiten Propylen-Copolymer-Fraktion (R-PP2) das Propylen-Copolymer bildet.

**13.** Verfahren nach Anspruch 12, wobei die Polymerisation in dem ersten Reaktor (R1) und zweiten Reaktor (2) in Gegenwart von einem Ziegler-Natta-Katalysator stattfindet.

**Revendications**

**1.** Copolymère de propylène, lequel copolymère de propylène

(a) possède une teneur en comonomères située dans la plage allant de 4,4 à 7,3 % en moles, et
(b) présente un indice de fluage $MFR_2$ (230°C), mesuré conformément à la norme ISO 1133, d'au moins 10 g/10 min, et lequel copolymère de propylène comprend, de préférence consiste en

(i) une première fraction de copolymère de propylène (R-PP1),

(ii) une deuxième fraction de copolymère de propylène (R-PP2),
(iii) un agent de nucléation, et
(iv) d'autres additifs optionnels différents de l'agent de nucléation,

dans lequel en outre
(c) la première fraction de copolymère de propylène (R-PP1) possède une teneur en comonomères située dans la plage allant de 1,5 à 3,0 % en moles, et
(d) la teneur en comonomères [en % en moles] de la deuxième fraction de copolymère de propylène (R-PP2) est supérieure à la teneur en comonomères [en % en moles] de la première fraction de copolymère de propylène (R-PP1).

2. Copolymère de propylène selon la revendication 1, dans lequel

(a) la teneur en comonomères de la deuxième fraction de copolymère de propylène (R-PP2) est située dans la plage allant de 5,0 à 15,0 % en moles,
et/ou
(b) l'inégalité (I) est satisfaite

$$C(PP) - C(PP1) \geq 1,0 \qquad\qquad (I)$$

dans laquelle

C(PP1) est la teneur en comonomères [en % en moles] de la première fraction de copolymère de propylène (R-PP1),
C(PP) est la teneur en comonomères [en % en moles] du copolymère de propylène total,

et/ou
(c) l'inégalité (II) est satisfaite

$$C(PP2) - C(PP1) \geq 3,0 \qquad\qquad (II)$$

dans laquelle

C(PP1) est la teneur en comonomères [en % en moles] de la première fraction de copolymère de propylène (R-PP1),
C(PP2) est la teneur en comonomères [en % en moles] de la deuxième fraction de copolymère de propylène (R-PP2).

3. Copolymère de propylène selon la revendication 1 ou 2, dans lequel

(a) le rapport en poids entre la première fraction de copolymère de propylène (R-PP1) et la deuxième fraction de copolymère de propylène (R-PP2) est de 40/60 à 54/46 ; et/ou
(b) le copolymère de propylène comprend au moins 90 % en poids, par rapport à la quantité totale du copolymère de propylène, de la première fraction de copolymère de propylène (R-PP1) et de la deuxième fraction de copolymère de propylène (R-PP2) ensemble.

4. Copolymère de propylène selon l'une quelconque des revendications précédentes, lequel copolymère de propylène présente

(a) un point de fusion supérieur à 148,0°C ;
et/ou
(b) un point de cristallisation supérieur à 119,0°C.

5. Copolymère de propylène selon l'une quelconque des revendications précédentes, dans lequel l'agent de nucléation est un agent de nucléation polymère, de préférence est un agent d'α-nucléation polymère, plus préférablement est un polymère de vinylcycloalcane et/ou un polymère de vinylalcane.

6. Copolymère de propylène selon l'une quelconque des revendications précédentes, dans lequel la quantité d'agent de nucléation, par rapport au poids total du copolymère de propylène, va jusqu'à 5,0 % en poids, de préférence ne dépasse pas 3000 ppm, plus préférablement est de 1 à 2000 ppm, le plus préférablement ne dépasse pas 500 ppm, encore plus préférablement est de 0,025 à 200 ppm, et de la façon la plus préférée la quantité d'agent de nucléation, par rapport au poids total du copolymère de propylène, est de 5 à 100 ppm.

7. Copolymère de propylène selon l'une quelconque des revendications précédentes, dans lequel

(a) le comonomère du copolymère de propylène est choisi parmi l'éthylène, une $\alpha$-oléfine en $C_4$ à $C_{12}$, et leurs mélanges, de préférence le comonomère est l'éthylène, et/ou
(b) les comonomères dans la première fraction de copolymère de propylène (R-PP1) et dans la deuxième fraction de copolymère de propylène (R-PP2) sont les mêmes.

8. Copolymère de propylène selon l'une quelconque des revendications précédentes, lequel copolymère de propylène

(a) n'est pas viscoréduit, de préférence est un copolymère de propylène préparé dans un réacteur ; et/ou
(b) ne contient pas de peroxyde.

9. Copolymère de propylène selon l'une quelconque des revendications précédentes, lequel copolymère de propylène

(a) possède une teneur en comonomères, de préférence une teneur en éthylène, située dans la plage allant de 4,5 à 7,0 % en moles ; et/ou
(b) présente un indice de fluage $MFR_2$ (230°C), mesuré conformément à la norme ISO 1133, situé dans la plage allant de 10 à 100 g/10 min, de préférence dans la plage allant de 30 à 100 g/10 min, de préférence dans la plage allant de 40 à 90 g/10 min.

10. Copolymère de propylène selon l'une quelconque des revendications précédentes, lequel copolymère de propylène est produit dans un procédé de polymérisation en séquence comprenant un premier réacteur (R1) et un deuxième réacteur (R2), dans lequel en outre la première fraction de copolymère de propylène (R-PP1) est produite dans le premier réacteur (R1) et la deuxième fraction de copolymère de propylène (R-PP2) est produite dans le deuxième réacteur (R2).

11. Article moulé comprenant un copolymère de propylène selon l'une quelconque des revendications précédentes.

12. Procédé pour produire un copolymère de propylène selon l'une quelconque des revendications 1 à 9, lequel procédé est un procédé de polymérisation en séquence comprenant les étapes consistant à

(a) polymériser du propylène et au moins une $\alpha$-oléfine différente du propylène dans un premier réacteur (R1), ce qui donne ainsi la première fraction de copolymère de propylène (R-PP1),
(b) transférer la première fraction de copolymère de propylène (R-PP1) dans un deuxième réacteur (R2),
(c) polymériser, en présence de la première fraction de copolymère de propylène (R-PP1), du propylène et au moins une $\alpha$-oléfine différente du propylène dans ledit deuxième réacteur (R2), ce qui donne une deuxième fraction de copolymère de propylène (R-PP2),

dans lequel le mélange de la première fraction de copolymère de propylène (R-PP1) et de la deuxième fraction de copolymère de propylène (R-PP2) forme le copolymère de propylène.

13. Procédé selon la revendication 12, dans lequel la polymérisation dans le premier réacteur (R1) et le deuxième réacteur (2) a lieu en présence d'un catalyseur de Ziegler-Natta.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1947143 A
- EP 1923200 A
- WO 9924478 A
- WO 9924479 A
- WO 0068315 A
- EP 0887379 A
- WO 9212182 A
- WO 2004000899 A
- WO 2004111095 A
- WO 8707620 A
- WO 9221705 A
- WO 9311165 A
- WO 9311166 A
- WO 9319100 A
- WO 9736939 A
- WO 9812234 A
- WO 9933842 A
- WO 9219659 A
- WO 9219653 A
- WO 9219658 A
- US 4347160 A
- US 4382019 A
- US 4435550 A
- US 4465782 A
- US 4473660 A
- US 4530912 A
- US 4560671 A
- EP 591224 A
- EP 1028984 A
- EP 1183307 A

**Non-patent literature cited in the description**

- **HANS ZWEIFEL.** Plastic Additives Handbook. 2001
- **GALLI ; VECELLO.** *Prog.Polym.Sci.,* 2001, vol. 26, 1287-1336
- **G. SINGH ; A. KOTHARI ; V. GUPTA.** *Polymer Testing,* 2009, vol. 28 (5), 475
- **Z. ZHOU ; R. KUEMMERLE ; X. QIU ; D. REDWINE ; R. CONG ; A. TAHA ; D. BAUGH ; B. WINNIFORD.** *J. Mag. Reson.,* 2007, vol. 187, 225
- **V. BUSICO ; P. CARBONNIERE ; R. CIPULLO ; C. PELLECCHIA ; J. SEVERN ; G. TALARICO.** *Macromol. Rapid Commun.,* 2007, vol. 28, 1128
- **L. RESCONI ; L. CAVALLO ; A. FAIT ; F. PIEMONTESI.** *Chem. Rev.,* 2000, vol. 100 (4), 1253
- **CHENG, H. N.** *Macromolecules,* 1984, vol. 17, 1950
- **W-J. WANG ; S. ZHU.** *Macromolecules,* 2000, vol. 33, 1157
- **W-J. WANG ; S. ZH.** *Macromolecules,* 2000, vol. 33, 1157